# FASCICULE DE BREVET EUROPEEN

(11) **EP 0 779 179 B1**
(45) Date de publication et mention de la délivrance du brevet: **22.03.2000**
(21) Numéro de dépôt: 96402621.5
(22) Date de dépôt: 04.12.1996
(51) Int. Cl.: B60P 7/06

(54) **Dipositif d'arrimage**
Verzurreinrichtung
Tie-down

(30) Priorité: 11.12.1995 FR 9515112
(43) Date de publication de la demande: 18.06.1997
(73) Titulaire: STAS SOCIETE TECHNIQUE D'ACCESSOIRES SPECIALISES Société anonyme dite:, F-78500 Sartrouville (FR)
(72) Inventeur: Archer, Michel, 78170 La Celle St Cloud (FR); Deveille, Daniel, 78500 Sartrouville (FR); Catier, Gabriel, 58480 Anlezy (FR)
(74) Mandataire: Boivin, Claude

(56) Documents cités:
- DE-A- 3 301 960
- DE-C- 3 509 877
- DE-C- 3 803 248
- DE-U- 8 905 859

## Description

Pour fixer une charge sur un plancher, par exemple le plancher d'un véhicule ou même d'un véhicule sur le plancher d'un soute d'avion ou d'une cale de navire, on utilise des chaînes ou des élingues qu'on accroche à des dispositifs d'arrimage fixés sur le plancher. Un dispositif d'arrimage est en général constitué par un anneau maintenu par un étrier soudé sur un élément de support qui peut être le plancher ou une plaque fixée sur ce plancher.

Dans le cas où le dispositif d'arrimage est fixé sur le plancher ou le châssis d'un véhicule, on prévoit souvent des moyens pour freiner le mouvement de l'anneau le long de l'étrier afin d'éviter que l'anneau ne se déplace sous l'effet des mouvements du véhicule.

C'est ainsi que le document DE-A-3 301 960 décrit un anneau pouvant basculer par rapport à des pièces de maintien fixées sur une paroi, un frein élastique étant interposé entre ce support et l'anneau. Mais cette disposition exige des anneaux de forme particulière. La présente invention a pour objet un dispositif d'arrimage à frein dans lequel le frein est particulièrement simple et efficace.

Ce dispositif d'arrimage est agencé comme défini dans la partie caractérisante de la revendication 1.

Dans un mode de réalisation avantageux de l'invention dans lequel le frein est facilement mis en place et ne peut se déplacer intempestivement du dispositif d'arrimage, l'étrier est soudé à ses deux extrémités sur son support, la branche centrale de la première portion de spire présente en son milieu un coude d'environ 10 à 30°, la soudure déborde à l'intérieur de chacune des boucles de l'étrier en formant un bourrelet annulaire et l'écart entre les deux bourrelets est inférieur à la largeur du ressort.

On a décrit ci-après, à titre d'exemple non limitatif, un mode de réalisation du dispositif d'arrimage selon l'invention avec référence aux dessins annexés dans lesquels :
La Figure 1 est une vue en élévation du dispositif,
La Figure 2 en est une vue latérale,
La Figure 3 en est une coupe suivant III-III de la Figure 2,
La Figure 4 est une vue en élévation du frein,
La Figure 5 est une vue en coupe montrant le frein lors de son passage entre les bourrelets de soudure,
La Figure 6 est une vue semblable à la Figure 2 d'une variante,
La Figure 7 est une vue en plan d'une variante du frein,
La Figure 8 est une vue en élévation du frein de la Figure 7.

Aux dessins, on voit une plaque de support 1 sur laquelle sont soudées les extrémités d'un étrier 2 servant de maintien à un anneau 3. Chacune des soudures 4 s'étend à l'extérieur de l'étrier 2 en formant un bourrelet annulaire 4a.

Un frein 5 est interposé entre la plaque 1 et l'anneau 3. Ce frein est constitué par un fil en acier à ressort et ccmprend une première portion de spire formée d'une branche 5a qui présente dans sa partie médiane une pliure 5b d'environ 10 à 30° et est prolongée à chacune de ses extrémités par une branche 5c perpendiculaire à la branche 5a.

La première portion de spire 5a-5c est prolongée à chacune de ses extrémités par une seconde portion de spire comprenant une branche 5d perpendiculaire à la branche 5c et une branche 5e perpendiculaire à la branche 5d. Chacune de ces secondes portions de spire se trouve dans un plan qui fait environ 20 à 50° avec le plan contenant la branche 5a et les branches 5c. La largeur du frein 5, c'est-à-dire l'écart entre deux plans parallèles tangents d'une part à la branche 5a, en 5b, et d'autre part aux branches 5d est supérieur à l'écart entre les deux bourrelets 4a en regard; la longueur des branches 5c est sensiblement égale à ce dernier écart. Les deux branches 5e sont au contact l'une de l'autre. Par ailleurs l'écart entre le plan des branches 5a et 5b et celui des branches 5e est, à l'état libre, légèrement supérieur à la distance séparant la plaque 1 de l'anneau 3.

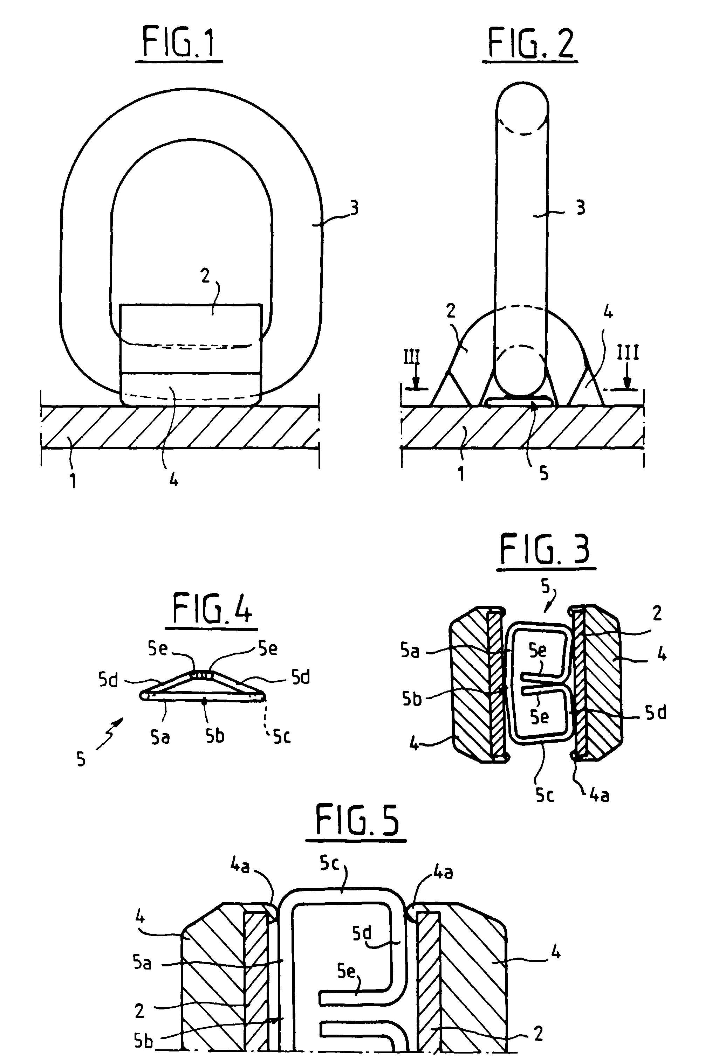

Pour freiner le mouvement de l'anneau 3, on glisse le frein 5 latéralement entre l'anneau 3 et l'étrier 2. Lorsque la branche avant 5c s'engage entre les bourrelets 4a , le frein se déforme comme représenté à la Figure 5, pour passer entre les bourrelets 4a, le coude 5b s'ouvrant; il reprend ensuite sa forme première, ce qui l'empêche de ressortir. Les branches 5d et 5e sont alors pressées élastiquement contre l'anneau 3, ce qui freine le mouvement de basculement de ce dernier.

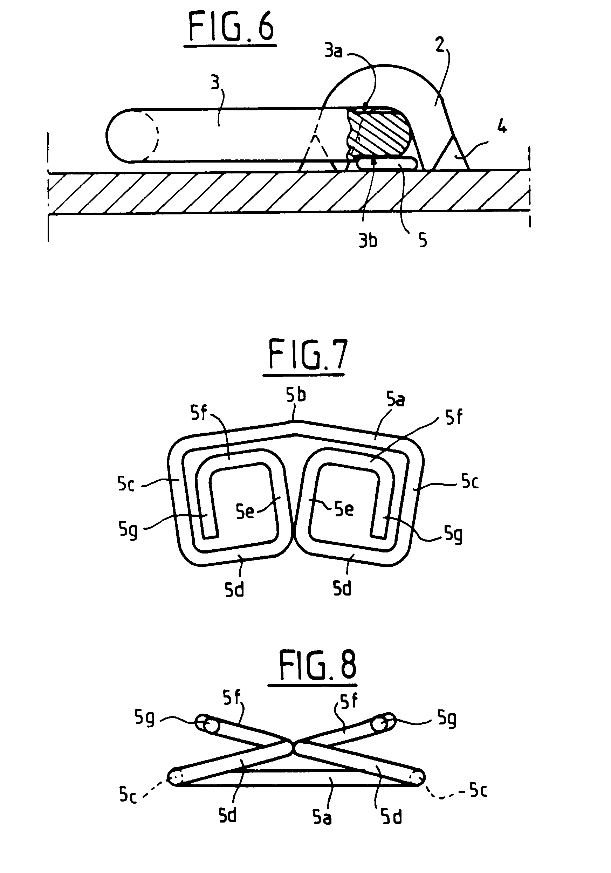

Dans le mode de réalisation de la Figure 6, l'une des branches d'extrémité de l'anneau 3 présente deux méplats opposés 3a et 3b. Ces méplats sont serrés entre le ressort 5 et l'étrier 2 de sorte que l'anneau 1 est bloqué en position.

Dans le mode de réalisation des Figures 6 et 7, chacune des secondes portions de spires 5d et 5e est prolongée par une troisième portion de spire 5f-5g, la branche 5f étant perpendiculaire à la branche 5e et la branche 5g perpendiculaire à la branche 5f; les plans de ces s troisièmes portions de spire font un angle de 20 à 50° avec le plan de la seconde portion de spire correspondante. L'angle que fait le plan d'une troisième portion de spire 5f-5g avec le plan de la seconde portion de spire 5d-5e est égal à celui que fait cette seconde portion de spire avec la première portion de spire 5a-5c. L'écart entre les branches 5e-5g est inférieur à l'écart entre les branches 5e-5c.

Il va de soi que la présente invention ne doit pas être considérée comme limitée aux divers modes de réalisation décrits et représentés, mais en couvre, au contraire, toutes les variantes, pour autant que l'invention reste définie par les revendications.

## Revendications

1. Dispositif d'arrimage comprenant un anneau (3) maintenu par un étrier (2) fixé sur un support (1) et un élément élastique (5) qui est pressé sur l'anneau (3) en freinant le mouvement de basculement de cet anneau (3), caractérisé en ce que le frein (5) est interposé entre l'étrier (2) et l'anneau (3) et comprend une première portion de spire (5a-5c) sensiblement en U, qui est prolongée à chacune de ses extrémités, par une seconde portion de spire (5d-5e) située dans un plan faisant 20 à 50° avec le plan de la première portion, l'écart entre le plan de la première portion de spire (5a-5c) et celui des branches d'extrémité ( 5d - 5c )des secondes portions de spire étant, à l'état libre, supérieur à la distance séparant le support (1) et l'anneau (3) de sorte que, lorsque le frein est inséré entre l'anneau (3) et le support (1), les secondes portions (5d-5e) de spire sont pressées élastiquement contre l'anneau (3) en freinant son mouvement de basculement.

2. Dispositif d'arrimage selon la revendication 1,
caractérisé en ce que l'étrier (2) est soudé à ses deux extrémités sur le support (1), en ce que la branche centrale (5a) de la première portion de spire présente en son milieu un coude (5b) d'environ 10 à 30°, et en ce que la soudure (4) déborde à l'intérieur de chacune des branches de l'étrier (2) en formant un bourrelet annulaire (4a) et en ce que l'écart entre les deux bourrelets (4a) est inférieur à la largeur du ressort.

3. Dispositif d'arrimage selon la revendication 1 ou 2,
caractérisé en ce que les branches (5a,5c,5d et 5e) du frein (5) sont perpendiculaires entre elles.

4. Dispositif d'arrimage selon l'une des revendications 1 à 3,
caractérisé en ce que, lorsque le frein (5) est à l'état libre,ses deux branches d'extrémité (5e) sont au contact l'une de l'autre.

5. Dispositif d'arrimage selon l'une des revendications 2 à 4,
caractérisé en ce que la longueur des branches latérales de la première portion de spire est égale à l'écart entre les deux bourrelets de soudure (4a).

6. Dispositif d'arrimage selon l'une des revendications 1 à 5,
caractérisé en ce que l'une des branches d'extrémité de l'anneau (3) présente deux méplats opposés (3a et 3b).

7. Dispositif d'arrimage selon l'une des revendications 1 à 6,
caractérisé en ce que chacune des secondes portions de caractérisé en ce que chacune des secondes portions de spire (5d-5e) est prolongée par une troisième portion de spire (5f-5g) qui est située dans un plan faisant un angle de 20 à 50° avec le plan de la seconde portion de spire correspondante.

8. Dispositif d'arrimage selon la revendication 7,
caractérisé en ce que l'angle que fait le plan de la troisième portion de spire (5f-5g) avec le plan de la seconde portion de spire correspondante est égal à celui que fait cette seconde portion de spire avec la première portion de spire (5a-5c).

9. Dispositif d'arrimage selon la revendication 7 ou 8,
caractérisé ce que l'écart entre les branches (5e-5g) caractérisé en ce que l'écart entre les branches (5e-5g) est inférieur à l'écart entre les branches (5e-5c).

## Patentansprüche

1. Verzurreinrichtung, enthaltend eine Öse (3), die von einem auf einem Träger (1) befestigten Bügel (2) festgehalten ist, und ein elastisches Element (5), das gegen die Öse (3) drückt, um die Schwenkbewegung der Öse (3) abzubremsen, dadurch gekennzeichnet, daß das Bremselement (5) zwischen den Bügel (2) und die Öse (3) zwischengelegt ist und einen ersten Windungsabschnitt (5a - 5c) im wesentlichen in Form eines U aufweist, der an jedem seiner Enden durch einen zweiten Windungsabschnitt (5d - 5e) verlängert ist, der in einer die Ebene des ersten Anschnittes unter einem Winkel von 20° bis 50° schneidenden Ebene liegt, wobei der Abstand zwischen der Ebene des ersten Windungsabschnittes (5a - 5c) und derjenigen der äußeren Schenkel (5d - 5c) der zweiten Windungsabschnitte im unbelasteten Zustand größer ist als der Abstand zwischen dem Träger (1) und der Öse (3), derart, daß, wenn das Bremselement zwischen die Öse (3) und den Träger (1) eingelegt ist, die zweiten Windungsabschnitte (5d - 5e) elastisch gegen die Öse (3) gedrückt werden und dabei deren Schwenkbewegung abbremsen.

2. Verzurreinrichtung nach Anspruch 1, dadurch gekennzeichnet, daß der Bügel (2) an seinen beiden Enden an dem Träger (1) festgeschweißt ist, daß der Mittelabschnitt (5a) des ersten Windungsabschnittes in seiner Mitte eine Abwinklung von etwa 10° bis 30° aufweist, und daß die Schweißnaht (4) über die Innenseite jedes der Schenkel des Bügels (2) vorspringt und dadurch eine Ringwulst (4a) bildet, und daß der Abstand zwischen den beiden Wülsten (4a) kleiner ist als die Breite des Federelementes.

3. Verzurreinrichtung nach Anspruch 1 oder 2, dadurch gekennzeichnet, daß die Schenkel (5a, 5c, 5d, 5e) des Bremselementes (5) senkrecht zueinander angeordnet sind.

4. Verzurreinrichtung nach einem der Ansprüche 1 bis 3, dadurch gekennzeichnet, daß, wenn das Bremselement (5) sich in seinem unbelasteten Zustand befindet, seine beiden äußeren Schenkel (5e) sich in Kontakt miteinander befinden.

5. Verzurreinrichtung nach einem der Ansprüche 2 bis 4, dadurch gekennzeichnet, daß die Länge der seitlichen Schenkel des ersten Windungsabschnittes gleich dem Abstand zwischen den beiden Schweißwülsten (4a) ist.

6. Verzurreinrichtung nach einem der Ansprüche 1 bis 5, dadurch gekennzeichnet, daß einer der äußeren Abschnitte der Öse (3) zwei entgegengesetzt gerichtete Abflachungen (3a und 3b) aufweist.

7. Verzurreinrichtung nach einem der Ansprüche 1 bis 6, dadurch gekennzeichnet, daß jeder der beiden zweiten Windungsabschnitte (5d - 5e) durch einen dritten Windungsabschnitt (5f - 5g) verlängert ist, der in einer Ebene liegt, die die Ebene des zugeordneten zweiten Windungsabschnittes unter einem Winkel von 20° bis 50° schneidet.

8. Verzurreinrichtung nach Anspruch 7, dadurch gekennzeichnet, daß der Winkel zwischen der Ebene des dritten Windungsabschnittes (5f - 5g) und der Ebene des zugeordneten zweiten Windungsabschnittes gleich dem Winkel ist, den dieser zweite Windungsabschnitt mit dem ersten Windungsabschnitt (5a - 5c) bildet.

9. Verzurreinrichtung nach Anspruch 7 oder 8, dadurch gekennzeichnet, daß der Abstand zwischen den Schenkeln (5e - 5g) kleiner ist als der Abstand zwischen den Schenkeln (5e - 5c).

## Claims

1. Stowage device including a ring (3) supported by a clamp (2) secured to a support (1) and an elastic element (5) which is pressed onto the ring (3), thus braking the tilting movement of this ring (3), characterised in that the brake (5) is inserted between the clamp (2) and the ring (3) and includes a first approximately U-shaped spire portion (5a-5c) extended at each of its ends by a second spire portion (5d-5e) situated inside a plane forming an angle of between 20 and 50° with the plane of the first portion, the distance between the plane of the first spire portion (5a-5c) and that of the end branches (5d-5c) of the second spire portions being in the free state larger than the distance separating the support (1) and the ring (3) so that, when the brake is inserted between the ring (3) and the support (1), the second spire portions (5d-5e) are pressed elastically against the ring (3), thus braking its tilting movement.

2. Stowage device according to claim 1, characterised in that the clamp (2) is welded at its two ends to the support (1), in that the central branch (5a) of the first spire portion has at its centre an elbow (5b) of between 10 and 30°, and in that the weld (4) projects inside each of the branches of the clamp (2), thus forming an annular flange (4a) and in that the distance between the two flanges (4a) is smaller than the width of the spring.

3. Stowage device according to claim 1 or 2, characterised in that the branches (5a,5c,5d and 5e) of the brake (5) are perpendicular to one another.

4. Stowage device according to one of claims 1 to 3, characterised in that, when the brake is in its free state, its two end branches (5e) are in contact with each other.

5. Stowage device according to one of claims 2 to 4, characterised in that the length of the lateral branches of the first spire portion is equal to the distance between the two weld flanges (4a).

6. Stowage device according to one of claims 1 to 5, characterised in that one of the end branches of the ring (3) have two opposing flat parts (3a and 3b).

7. Stowage device according to one of claims 1 to 6, characterised in that each of the second spire portions (5d-5e) is extended by a third spire portion (5f-5g) which is situated inside a plane forming an angle of between 20 and 50° with the plane of the second corresponding spire portion.

8. Stowage device according to claim 7, characterised in that the plane of the spire portion (5f-5g) formed with the plane of the second corresponding spire portion is equal to the one this second spire portion forms with the first spire portion (5a-5c).

9. Stowage device according to claim 7 or 8, characterised in that the distance between the branches (5e-5g) is smaller than the distance between the branches (5e-5c).
